**Europäisches Patentamt**

**European Patent Office**

**Office européen des brevets**

(19)

(11) Veröffentlichungsnummer: **0 025 825**
**A1**

(12) # EUROPÄISCHE PATENTANMELDUNG

(21) Anmeldenummer: 80103927.2

(22) Anmeldetag: 09.07.80

(51) Int. Cl.³: **B 29 F 1/02**
**B 29 F 3/03**

(30) Priorität: 23.08.79 DE 2934147

(43) Veröffentlichungstag der Anmeldung:
01.04.81 Patentblatt 81/13

(84) Benannte Vertragsstaaten:
AT CH FR GB IT LI NL SE

(71) Anmelder: MANNESMANN DEMAG
KUNSTSTOFFTECHNIK ZWEIGNIEDERLASSUNG DER
MANNESMANN DEMAG AKTIENGESELLSCHAFT
Rennweg 37
D-8500 Nürnberg(DE)

(72) Erfinder: Loske, Ulrich
Gustav-Weisskopf-Weg 5
D-8500 Nürnberg(DE)

(74) Vertreter: LOUIS, PÖHLAU, LOHRENTZ & SEGETH
Kesslerplatz 1
D-8500 Nürnberg(DE)

(54) **Entgasungs-Schneckenspritzgiessmaschine.**

(57) Bei Schneckenspritzgiessmaschinen für Kunststoffe, die einen hohen Gehalt an flüchtigen Bestandteilen haben, sind Schnecken mit einer Entgasungszone notwendig, in der die flüchtigen Bestandteile aus dem plastifizierten Kunststoff austreten und durch eine Absaugöffnung (4) abgezogen werden können. Um die notwendige Länge solcher Entgasungsschnecken (2) verringern zu können, wird vorgeschlagen, dass die Schnecke (2) vor oder hinter ihrer Entgasungzone (8) einen Sacknutentorpedo (12) aufweist. Der Sacknutentorpedo (12) ist ein einen Teil der Schnecke (2) bildendes Förderelement für den Kunststoff, das in axialer Richtung verlaufende Nuten (13) aufweist, die alternierend an einem Ende verschlossen sind. Die Nuten (13) sind paarweise angeordnet. Zwischen einer zur Entgasungszone (8) hin offenen und einer geschlossenen Nut (13) ist ein Überströmsteg (14) vorgesehen, der mit dem Spritzzylinder (1) einen Überströmspalt bildet, in welchem der Kunststoff von der einen Nut (13) zur anderen gefördert wird.

- 1 -

## Entgasungs-Schneckenspritzgiessmaschine

Die Erfindung betrifft eine Schneckenspritzgiessmaschine für Kunststoffe mit einem hohen Gehalt an flüchtigen Bestandteilen (Entgasungs-Spritzgiessmaschine), mit einem Spritzzylinder, der eine Absaugöffnung für die flüchtigen Bestandteile aufweist, und mit einer drehbar und axial verschiebbar gelagerten Schnecke, die ein Drosselelement und im Bereich der Absaugöffnung eine Entgasungszone besitzt.

Die Schnecken von Entgasungs-Spritzgiessmaschinen der vorstehend beschriebenen Art weisen in Förderrichtung der Kunststoffmasse vor der Entgasungszone eine Einzugszone für das Kunststoffgranulat, eine daran anschliessen-de Kompressions- und Umwandlungszone sowie eine Metering-oder Homogenisierungszone auf. Im Bereich der Entgasungszone wird die bereits vollständig oder überwiegend plastifizierte oder verflüssigte Kunststoffmasse durch einen oder mehrere Drosselspalte geleitet, die durch das Drosselelement gebildet werden. Dadurch sinkt der Druck in der Kunststoffmasse ab und darin enthaltene flüchtige Bestandteile werden in Form von Gas- oder Dampfblasen frei. Der austretende Dampf bzw. das Gas

- 2 -

wird durch die Absaugöffnung im Spritzzylinder abgesaugt. Anschliessend an die Entgasungszone wird die Kunststoffmasse erneut eingezogen, komprimiert und homogenisiert und gelangt dann in den Sammelraum des Spritzzylinders.

Infolge der Doppelanordnung von Schnecken vor und hinter der Entgasungszone sind die Schnecken von Entgasungs-Spritzgiessmaschinen verhältnismässig lang, d.h. sie erreichen Längen bis zu 27 D(D= Schneckendurchmesser). Derartig lange Schnecken sind aber nicht nur wegen des damit verbundenen Platzbedarfes, sondern auch festigkeitsmässig und lagertechnisch problematisch. Eine Verringerung der Schneckenlänge ist aber nicht ohne weiteres möglich, da im Bereich der Entgasungszone das Kunststoffmaterial zumindest so weitgehend aufgeschmolzen sein muss, dass eine einwandfreie Entgasung möglich ist, anschliessend aber auch das entgaste Material wieder eingezogen, komprimiert und homogenisiert werden muss. Geht man an die untere Grenze einer gerade noch vertretbaren Schneckenlänge, so besteht die Gefahr, dass unbefriedigend aufgeschlossenes oder homogenisiertes und vor allem unzureichend entgastes Kunststoffmaterial aus der Spritzdüse ausgespritzt wird.

Der Erfindung liegt daher die Aufgabe zugrunde, eine Schneckenspritzgiessmaschine der eingangs genannten Art vorzuschlagen, die eine Verkürzung der Schneckenlänge erlaubt, ohne dass ein Qualitätsabfall hinsichtlich des Kunststoffmaterials in Kauf genommen werden muss.

Erfindungsgemäss wird dies dadurch erreicht, dass die Schnecke vor oder hinter der Entgasungszone einen Sacknutentorpedo aufweist.

Der Sacknutentorpedo ist ein von Extruderschnecken her bekanntes Element, das als Pumpe für viskose Medien entwickelt wurde (vgl. "Industrie-Anzeiger" 83, (1972) 94, S. 2092 bis 2096). Der Sacknutentorpedo weist in axialer Richtung verlaufende Nuten auf, die abwechselnd an einem Ende verschlossen sind. Kunststoffmasse tritt in eine der nach hinten offenen Axialnuten ein, wird umgelenkt und gelangt über einen Überströmsteg zu der benachbarten Axialnut, die nach vorne hin offen ist. Die Homogenisierung des Kunststoffes und der Druckaufbau in der Kunststoffschmelze erfolgen hauptsächlich im Bereich des Schmelzefilms, der sich über der nach vorn verschlossenen Axialnut und über dem Überströmsteg ausbildet, und zwar durch eine Schleppströmung. Infolge der im Bereich des Sacknutentorpedos möglichen sehr konzentrierten Energiezufuhr lassen sich auf einer Länge von beispielsweise 2 D entsprechende Funktionen erfüllen, die bei einer herkömmlichen Spritzschnecke eine Länge von beispielsweise bis zu 8 D benötigen. Daraus resultiert bei einem Einsatz des Sacknutentorpedos für eine Entgasungs-Spritzschnecke eine Verkürzung bis zu 6 D bei gleicher Aufschmelz- und Homogenisierungsleistung oder eine erheblich bessere Aufschliessung und Homogenisierung des Kunststoffmaterials bei unveränderter Schneckenlänge. Infolge der Verwendung einer Schnecke mit Sacknutentorpedo erhält man weiterhin den erheblichen Vorteil, dass beim Umbau bestehender

- 4 -

Schneckenspritzgiessmaschinen auf eine Entgasungs-
schnecke keine so grosse Einbusse an Schussvolumen
hingenommen werden muss, wie dies bisher der Fall ist.
Denn infolge des Sacknutentorpedos kann die zur Erzielung der notwendigen Baulänge von beispielsweise
22 D erforderliche Verringerung des Schneckendurchmessers D kleiner gehalten werden.

Vorteilhafterweise wird bei einer Entgasungs-Spritzschnecke, die eine in Förderrichtung der Kunststoffmasse vor der Entgasungszone liegende erste Kompressionszone und hinter der Entgasungszone eine
zweite Kompressionszone aufweist, der Sacknutentorpedo in der zweiten Kompressionszone und/oder
Meteringzone angeordnet. Der Sacknutentorpedo kann
aber auch selbst die zweite Kompressions- und/oder
Meteringzone bilden. Auf diese Weise ist es möglich,
die Kompresssions- und Homogenisierungszone hinter
der Entgasungszone erheblich zu verkürzen und um einen
entsprechenden Betrag oder etwas weniger den vor der
Entgasungszone liegenden Schneckenabschnitt zu verlängern. Es ist dadurch gewährleistet, dass auch schwer
aufschmelzbare Materialien in dem vor der Entgasungszone liegenden Schneckenabschnitt einwandfrei aufbereitet werden, sodass eine vollständige Entgasung
stattfinden kann und sich in dem an die Entgasungszone
anschliessenden Schneckenabschnitt bei erhöhter Förderleistung keine Festkörperanteile (Granulat) mehr befinden.
In diesem Schneckenabschnitt, der den Sacknutentorpedo
enthält, erfolgt dann nur noch die erneute Kompression
und Homogenisierung, die weitgehend mittels des Sacknutentorpedos auf kurzer Länge durchgeführt werden kann.

- 5 -

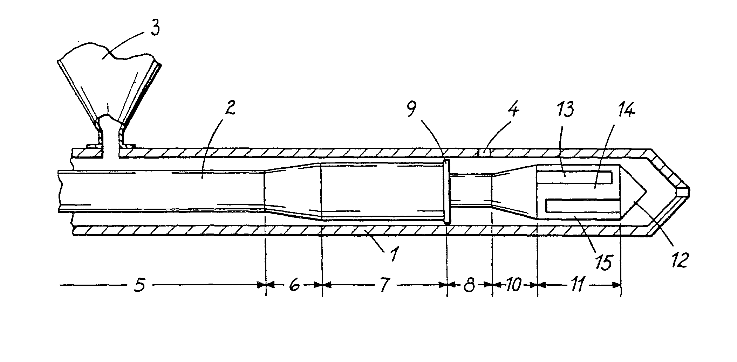

Ein Ausführungsbeispiel der Erfindung wird nachfolgend anhand der beiliegenden Zeichnung näher erläutert.

Die Zeichnung zeigt rein schematisch einen Längsschnitt durch einen Spritzzylinder 1 einer im übrigen nicht dargestellten Entgasungs-Spritzgiessmaschine.
In dem Spritzzylinder 1 ist eine Schnecke 2 in bekannter Weise axial verschiebbar und drehbar gelagert.
Der Spritzgiesszylinder 1 weist eine Einfüllöffnung
mit einem Einfülltrichter 3 auf, durch den Kunststoffgranulat in das Zylinderinnere gelangt. Ausserdem ist
eine Entgasungs- oder Abzugöffnung 4 vorgesehen.

Die Schnecke 2 ist in bekannter Weise unterteilt in
eine erste Einzugszone 5, an die sich eine erste
Kompressionszone 6 und daraufhin eine erste Homogenisierungszone 7 anschliessen. Zwischen der Homogenisierungszone 7 und einer Entgasungszone 8 ist als Drosselelement eine Stauscheibe 9 angeordnet, die entweder zur
Zylinderinnenwand einen so geringen Abstand einhält,
dass ein Drosselspalt gebildet wird,oder die mit einer
Anzahl von Durchtrittsöffnungen (Lochplatte) versehen
ist. Anschliessend an die Entgasungszone 8 weist die
Schnecke eine zweite Kompressionszone 10 und eine Homogenisierungszone 11 auf.

Die Homogenisierungszone 11 ist durch einen Sacknutentorpedo 12 gebildet, dessen Nuten 13 alternierend zur
Schneckenspitze hin axial geöffnet und geschlossen sind.
Die Nuten 13 bilden somit jeweils Nutenpaare, zwischen

- 6 -

denen ein Überströmsteg 14 angeordnet ist. Zu beiden Seiten jedes Nutenpaares sind Sperrstege 15 vorhanden, die einen Durchtritt von Kunststoffmasse in Umfangsrichtung nicht gestatten. In dem Ausführungsbeispiel weist der Sacknutentorpedo 12 zwei Nutenpaare 13 auf.

Die Schnecke 2 hat eine Gesamtlänge von etwa 22 D. Davon entfallen etwa 16 D auf den ersten Schneckenabschnitt vor der Stauscheibe 9. Aufgrund der erfindungsgemässen Anordnung eines Sacknutentorpedos 12 im zweiten Schneckenabschnitt hinter der Stauscheibe 9 ist es möglich, diesen Schneckenabschnitt auf insgesamt 6 D zu verkürzen, ohne dass bezüglich Homogenisierung des Kunststoffmaterials und des Druckaufbaues Einbussen hingenommen werden müssen.

Wie sich aus der zeichnerischen Darstellung ergibt, ist der Sacknutentorpedo 12 anschliessend an die Kompressionszone 10 in der Homogenisierungs- oder Meteringzone 11 angeordnet bzw. bildet diese. Dies hat den Vorteil, dass das Einzugsverhalten anschliessend an die Entgasungszone 8 durch das etwas verringerte Einzugsvermögen des Sacknutentorpedos 12 nicht beeinträchtigt wird.

Der zeichnerischen Vereinfachung halber sind keine Schneckengänge der Schnecke 2 dargestellt. Tatsächlich ist jedoch in bekannter Weise die Schnecke 2 auf ihrer Länge mit Schneckengängen ggf. unterschiedlicher Steigung und Gangtiefe in den verschiedenen Zonen versehen. Anschliessend an die Stauscheibe 9 kann ein kurzer gangloser Bereich vorgesehen sein.

- 1 -

Patentansprüche

1. Schneckenspritzgiessmaschine für Kunststoffe mit einem hohen Gehalt an flüchtigen Bestandteilen (Entgasungs-Schneckenspritzgiessmaschine), mit einem Spritzzylinder, der eine Absaugöffnung für die flüchtigen Bestandteile aufweist, und mit einer drehbar und axial verschiebbar gelagerten Schnecke, die ein Drosselelement und im Bereich der Absaugöffnung eine Entgasungszone besitzt, dadurch gekennzeichnet, dass die Schnecke vor oder hinter der Entgasungszone (8) einen Sacknutentorpedo (12) aufweist.

2. Spritzgiessmaschine nach Anspruch 1, bei der die Schnecke in Förderrichtung der Kunststoffmasse vor der Entgasungszone eine erste Kompressionszone und hinter der Entgasungszone eine zweite Kompressionszone aufweist, dadurch gekennzeichnet, dass der Sacknutentorpedo (12) in der zweiten Kompressionszone und/oder Meteringzone angeordnet ist oder diese bildet.

0025825

### EUROPÄISCHER RECHERCHENBERICHT

**Europäisches Patentamt**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 1 529 882 (DYNAMIT NOBEL AG) <br> * Anspruch * <br> -- | 1 | B 29 F   1/02 <br> B 29 F   3/03 |
| | DE - A - 1 779 122 (MONTECATINI EDISON S.P.A.) <br> * Anspruch 1 * <br> -- | 1 | |
| | DE - B - 1 729 373 (UNION CARBIDE CORP.) <br> * Anspruch 1; Fig. 1 * <br> -- | 1 | |
| | DE - A1 - 2 556 916 (SUMITOMO BAKELITE CO. LTD.) <br> * Anspruch 6; Fig. 2A * <br> -- | | **RECHERCHIERTE SACHGEBIETE (Int. Cl.³)** <br><br> B 29 F   1/00 <br> B 29 F   3/00 |
| A | US - A - 4 079 463 (R.C. MILLER) <br> * Spalte 3, Zeilen 51 bis 54 * <br> -- | | |
| A | DE - B2 - 2 217 413 (K.K. MEIKI SEISA-KUSHO) <br> * Anspruch * <br> -- | | |
| A | CH - A - 543 371 (BATTELLE MEMORIAL INSTITUTE) <br> * Fig. 1, 2 * <br> -- | | |
| A | DE - B2 - 2 005 095 (KRAUSS-MAFFEI AG) <br> * Anspruch 1 *     ./.. <br> -- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

|X| Der vorliegende Recherchenbericht wurde für alle Patentansprüche erstellt.

| Recherchenort | Abschlußdatum der Recherche | Prüfer |
|---|---|---|
| Berlin | 17-12-1980 | BITTNER |

**Europäisches Patentamt**

**EUROPÄISCHER RECHERCHENBERICHT**

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | | betrifft Anspruch | |
| D,A | INDUSTRIE-ANZEIGER, Band 94, Nr. 88, 1972 G. SCHENKEL "Kunststoff-Extruderschecken mit Sacknutentorpedo" Seiten 2092 bis 2096 * Abbildungen 1, 7 * ———— | | | |
| | | | | **RECHERCHIERTE SACHGEBIETE (Int. Cl.3)** |